# EUROPEAN PATENT APPLICATION

(11) **EP 4 488 730 A1**
(43) Date of publication of application: **08.01.2025**
(21) Application number: 22929691.8
(22) Date of filing: 01.03.2022
(51) Int. Cl.: G02B 6/26

(54) **MULTICORE FIBER CONNECTING DEVICE AND MULTICORE FIBER CONNECTING METHOD**

(71) Applicant: NEC Corporation, 108-8001 Tokyo (JP)
(72) Inventor: TAKESHITA Hitoshi, Tokyo 108-8001 (JP)
(74) Representative: Betten & Resch
(86) International application number: PCT/JP2022/008499
(87) International publication number: WO 2023/166542

(57) **Abstract**

Because the intensities of optical signals guided through a multicore fiber differ for each core when connecting and using the multicore fiber, this multicore fiber connecting device (100) has: a fiber position adjusting means (110) that adjusts the spatial positions of a first multicore fiber (10) and a second multicore fiber (20) connected to the first multicore fiber (10); a first optical connecting means (120) that introduces testing light of a different wavelength for each core, to the cores of the first multicore fiber (10); an optical spectrum information generating means (130) that generates optical spectrum information about the testing light after the testing light has been guided through the first multicore fiber (10) and the second multicore fiber (20); and a control means (140) that uses the optical spectrum information to control the fiber position adjusting means (110).

## Description

### Technical Field

The present invention relates to a multicore fiber connecting device and a multicore fiber connecting method, and, particularly, relates to a multicore fiber connecting device and a multicore fiber connecting method that are used in a multicore fiber optical transmission system.

### Background Art

Due to rapid expansion of mobile traffic and a video service, and the like, expansion of communication capacity in a core network is demanded. The demand for capacity expansion tends to continue in future. Expansion of communication capacity has hitherto been achieved by using a time multiplexing technique and a wavelength multiplexing technique. The time multiplexing technique and the wavelength multiplexing technique have been applied to an optical communication system by a single-core optical fiber.

In order to further expand communication capacity, a spatial multiplexing technique being a multiplexing technique of a dimension differing from a conventional multiplexing technique is developed. For a spatial multiplexing technique, there are a multicore technique that increases the number of cores per optical fiber, and a multi-mode technique that increases the number of propagation modes. Each of the number of cores and the number of modes used in current optical fiber communication is one. Thus, by increasing the number of cores and the number of modes, it is possible to dramatically expand communication capacity.

One example of an axis alignment method of a multicore fiber used in such a multicore technique is described in PTL 1.

In the axis alignment method of a multicore fiber described in PTL 1, first, multicore fibers A₁ and A₂ are opposed with axis alignment ends a₃ and a₄ thereof close to each other. A controller S₀ controls an attraction mechanism of an axis alignment device, and a controller S₁ controls a rotation mechanism of the axis alignment device. Herein, in order to deal with crosstalk between the axis alignment ends as and a₄, it is assumed that wavelengths of two optical signals leading to the controllers S₀ and S₁ are caused to differ from each other, a wavelength of one optical signal is set to λ₀, and a wavelength of the other optical signal is set to λ₁. In this instance, one optical signal λ₀ is passed through each of center cores of the both multicore fibers A₁ and A₂, and the other optical signal λ₁ is passed through each peripheral core. Then, such axis alignment end movement adjustment in X and Y directions and axis alignment end rotational adjustment in a θ direction that optical power becomes maximum in each of the controllers S₀ and S₁ are performed. As a result, it is said that each of the controllers S₀ and S₁ acquires a maximum value of optical power only by a predetermined signal. It is said that, with such a configuration, according to an axis alignment method of a related multicore fiber, such a matter that an error occurs in a maximum value of optical power due to a crosstalk signal is avoided, and axis alignment in a multicore fiber can be performed accurately and easily.

### Citation List

### Patent Literature

PTL 1: Japanese Examined Patent Publication No. S61-051764

### Summary of Invention

### Technical Problem

As described above, in an axis alignment method of a multicore fiber described in PTL 1, it is said that accurate axis alignment can be performed by avoiding an influence due to crosstalk between axis alignment ends by use of optical signals of different wavelengths. However, even when axis alignment of multicore fibers is performed, a connection loss for each core does not necessarily become uniform. Thus, a case where intensity of an optical signal guided through a connected multicore fiber differs for each core arises.

In this way, there has been a problem that, when a multicore fiber is connected and used, intensity of an optical signal guided through the multicore fiber differs for each core.

An object of the present invention is to provide a multicore fiber connecting device and a multicore fiber connecting method that solve a problem, being the above-described problem, that, when a multicore fiber is connected and used, intensity of an optical signal guided through the multicore fiber differs for each core.

### Solution to Problem

A multicore fiber connecting device according to the present invention includes a fiber position adjusting means for adjusting spatial positions of a first multicore fiber and a second multicore fiber connected to the first multicore fiber, a first optical connecting means for introducing testing light of a different wavelength for each core, to each of the cores of the first multicore fiber, an optical spectrum information generating means for generating optical spectrum information of the testing light after the testing light has been guided through the first multicore fiber and the second multicore fiber, and a control means for controlling the fiber position adjusting means by use of the optical spectrum information.

A multicore fiber connecting method according to the present invention includes introducing testing light of a different wavelength for each core, to each of the cores of a first multicore fiber, generating optical spectrum information of the testing light after the testing light has been guided through the first multicore fiber, and a second multicore fiber connected to the first multicore fiber, and adjusting spatial positions of the first multicore fiber and the second multicore fiber by use of the optical spectrum information.

### Advantageous Effects of Invention

A multicore fiber connecting device and a multicore fiber connecting method according to the present invention can uniform, when a multicore fiber is connected and used, intensity for each core of an optical signal guided through the multicore fiber.

### Brief Description of Drawings

[Fig. 1] Fig. 1 is a block diagram illustrating a configuration of a multicore fiber connecting device according to a first example embodiment of the present invention.
[Fig. 2] Fig. 2 is a diagram for describing an operation of a fiber position adjusting unit included in the multicore fiber connecting device according to the first example embodiment of the present invention.
[Fig. 3] Fig. 3 is a block diagram illustrating a configuration of a first optical connecting unit included in the multicore fiber connecting device according to the first example embodiment of the present invention.
[Fig. 4] Fig. 4 is a block diagram illustrating a configuration of an optical spectrum information generating unit included in the multicore fiber connecting device according to the first example embodiment of the present invention.
[Fig. 5] Fig. 5 is a diagram illustrating optical spectrum information generated by an optical spectrum information generating unit 130 included in the multicore fiber connecting device according to the first example embodiment of the present invention.
[Fig. 6] Fig. 6 is a flowchart for describing a multicore fiber connecting method according to the first example embodiment of the present invention.
[Fig. 7] Fig. 7 is a block diagram illustrating a configuration of a multicore fiber connecting device according to a second example embodiment of the present invention.
[Fig. 8] Fig. 8 is a block diagram illustrating a configuration of a spatial optical system coupling unit included in a second optical connecting unit included in the multicore fiber connecting device according to the second example embodiment of the present invention.
[Fig. 9] Fig. 9 is a block diagram illustrating another configuration of the second optical connecting unit included in the multicore fiber connecting device according to the second example embodiment of the present invention.
[Fig. 10A] Fig. 10A is a cross-sectional view of a second multicore fiber used with the multicore fiber connecting device according to the second example embodiment of the present invention.
[Fig. 10B] Fig. 10B is a cross-sectional view of a multimode fiber constituting a second optical connecting unit included in the multicore fiber connecting device according to the second example embodiment of the present invention.
[Fig. 11] Fig. 11 is a flowchart for describing a multicore fiber connecting method according to the second example embodiment of the present invention.

### Example Embodiment

Example embodiments according to the present invention are described below with reference to the drawings.

### [First example embodiment]

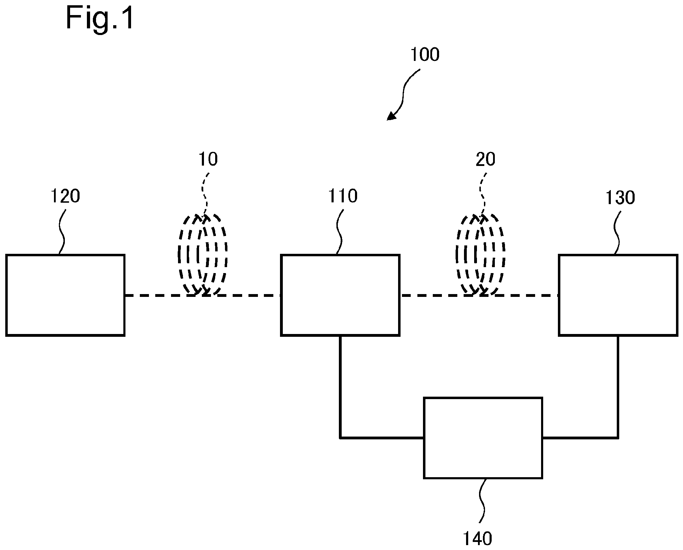

Fig. 1 is a block diagram illustrating a configuration of a multicore fiber connecting device 100 according to a first example embodiment of the present invention. The multicore fiber connecting device 100 includes a fiber position adjusting unit (fiber position adjusting means) 110, a first optical connecting unit (first optical connecting means) 120, an optical spectrum information generating unit (optical spectrum information generating means) 130, and a control unit (control means) 140.

The fiber position adjusting unit 110 adjusts spatial positions of a first multicore fiber 10, and a second multicore fiber 20 connected to the first multicore fiber 10. The first optical connecting unit 120 introducing testing light of a different wavelength for each core, to each of the cores of the first multicore fiber 10. The optical spectrum information generating unit 130 generates optical spectrum information of the testing light after the testing light has been guided through the first multicore fiber 10 and the second multicore fiber 20. Then, the control unit 140 controls the fiber position adjusting unit 110 by use of the optical spectrum information.

In this way, the multicore fiber connecting device 100 according to the present example embodiment is configured to introduce, to a multicore fiber, testing light of a different wavelength for each core, and adjust a spatial position of the multicore fiber by use of optical spectrum information of the testing light after the testing light has been guided through the multicore fiber. Thus, the spatial position of the multicore fiber can be adjusted in such a way that a connection loss for each core becomes uniform. Therefore, the multicore fiber connecting device 100 according to the present example embodiment can uniform, when a multicore fiber is connected and used, intensity for each core of an optical signal guided through the multicore fiber.

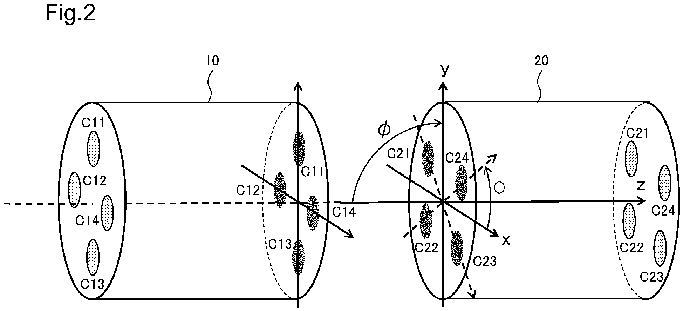

As illustrated in Fig. 2, the fiber position adjusting unit 110 adjusts, in relation to each of positions of the first multicore fiber 10 and the second multicore fiber 20, each of an in-plane position (x-direction and y-direction in the figure), an axial position (z-direction), and a rotation amount (θ-direction and ϕ-direction). Note that, Fig. 2 illustrates, as an example, a case where each of the first multicore fiber 10 and the second multicore fiber 20 includes four cores (C11 to C14 and C21 to C24).

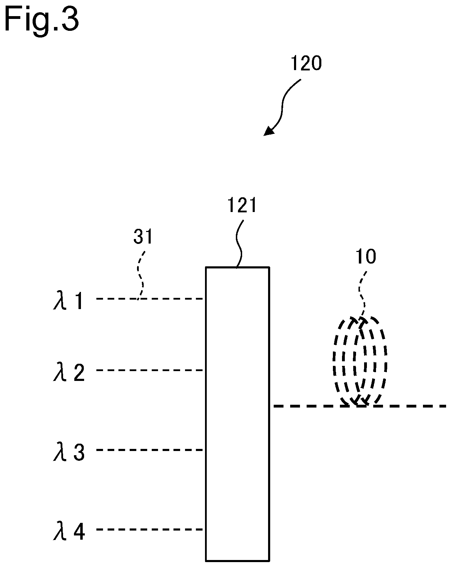

The first optical connecting unit 120 can be configured to include a fan-in fan-out (FIFO) unit (fan-in fan-out means). Fig. 3 illustrates one example of a configuration of the first optical connecting unit 120. The fan-in fan-out unit 121 connects each core of the first multicore fiber 10 to each of first single-core fibers 31 through which each of beams of testing light of different wavelengths (λ1 to λ4 in the example of Fig. 3) is guided. The first single-core fiber 31 is typically a single mode fiber (SMF). As the fan-in fan-out (FIFO) unit 121, a fine bundle type FIFO or a melt drawing type FIFO can be used. Alternatively, a spatial optical FIFO or a planar optical waveguide type FIFO may be used.

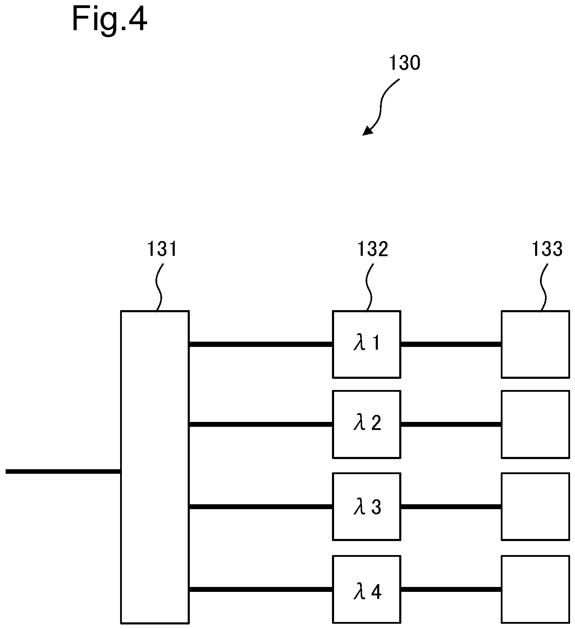

As the optical spectrum information generating unit 130, an optical spectrum analyzer or an optical power meter can typically be used. Fig. 4 illustrates one example of a configuration of the optical spectrum information generating unit 130. As illustrated in the figure, the optical spectrum information generating unit 130 can be configured to include an optical coupler 131, an optical bandpass filter 132, and an optical power meter 133. Although Fig. 4 illustrates a configuration including four optical bandpass filters 132 associated with different wavelengths (λ1 to λ4 in the example of Fig. 4) of testing light, the present invention is not limited to thereto, and a configuration including a wavelength turnable optical bandpass filter may be adopted.

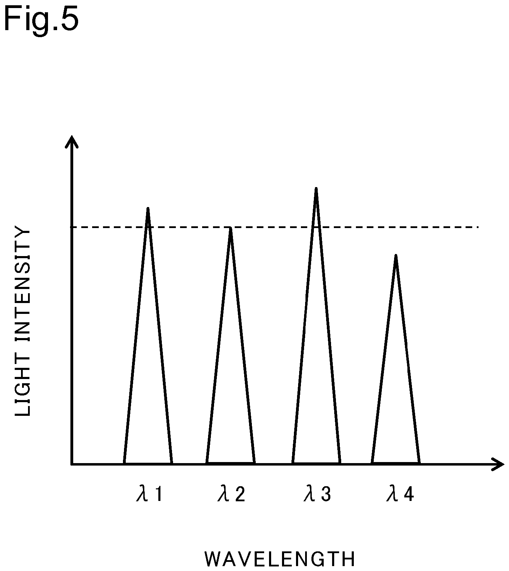

Fig. 5 illustrates one example of optical spectrum information of testing light generated by the optical spectrum information generating unit 130. Herein, the control unit 140 can be configured to control the fiber position adjusting unit 110 in such a way that a difference in light intensity for each of the different wavelengths (λ1 to λ4 in the example of Fig. 5) of the testing light is reduced. In other words, the control unit 140 adjusts positions (x-direction, y-direction, and z-direction) and rotation (θ-direction, ϕ-direction) of the first multicore fiber 10 and the second multicore fiber 20, and controls in such a way that a difference in light intensity for each of the different wavelengths of the testing light is reduced. As the control unit 140, for example, a central processing unit (CPU) or the like can be used.

The multicore fiber connecting device 100 can be configured to further include an end face fusing portion (end face fusing means). The end face fusing portion melts and connects an end face of the first multicore fiber 10 and the end face of the second multicore fiber 20. Herein, the fiber position adjusting unit 110 and the end face fusing portion constitute an optical fiber fusion splicer. The optical fiber fusion splicer is a device that melts an optical fiber end with heat generated by arc discharge, and instantly splices end faces of optical fibers arranged on left and right.

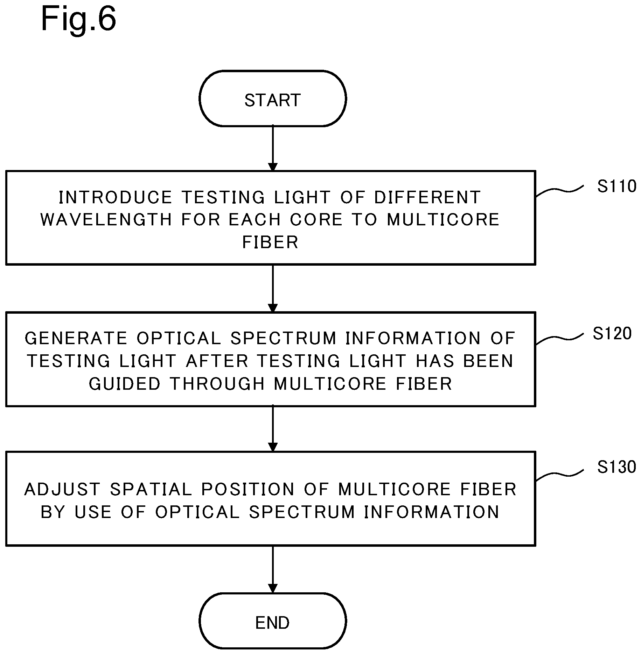

Next, a multicore fiber connecting method according to the present example embodiment is described by use of a flowchart illustrated in Fig. 6.

In the multicore fiber connecting method according to the present example embodiment, first, testing light of a different wavelength for each core is introduced to each of the cores of the first multicore fiber (step S110). Next, optical spectrum information of the testing light after the testing light has been guided through the first multicore fiber and a second multicore fiber connected to the first multicore fiber is generated (step S120). Then, spatial positions of the first multicore fiber and the second multicore fiber are adjusted by use of the optical spectrum information (step S130).

In this way, the multicore fiber connecting method according to the present example embodiment is configured to introduce testing light of a different wavelength for each core is to a multicore fiber, and adjust a spatial position of the multicore fiber by use of optical spectrum information of the testing light after the testing light has been guided through the multicore fiber. Thus, the spatial position of the multicore fiber can be adjusted in such a way that a connection loss for each core becomes uniform. Therefore, the multicore fiber connecting method according to the present example embodiment can uniform, when a multicore fiber is connected and used, intensity for each core of an optical signal guided through the multicore fiber.

It can be assumed that adjusting a spatial position of the multicore fiber (step S130) includes adjusting the spatial position in such a way that a difference in light intensity for each of the different wavelengths of the testing light is reduced. Further, it can be assumed that introducing the testing light (step S 110) includes connecting each core of the first multicore fiber to each of the first single-core fibers through which each of beams of the testing light of different wavelengths is guided.

It may be assumed that the multicore fiber connecting method according to the present example embodiment further includes melting and connecting an end face of the first multicore fiber and an end face of the second multicore fiber.

As described above, the multicore fiber connecting device 100 and the multicore fiber connecting method according to the present example embodiment can uniform, when a multicore fiber is connected and used, intensity for each core of an optical signal guided through the multicore fiber.

### [Second example embodiment]

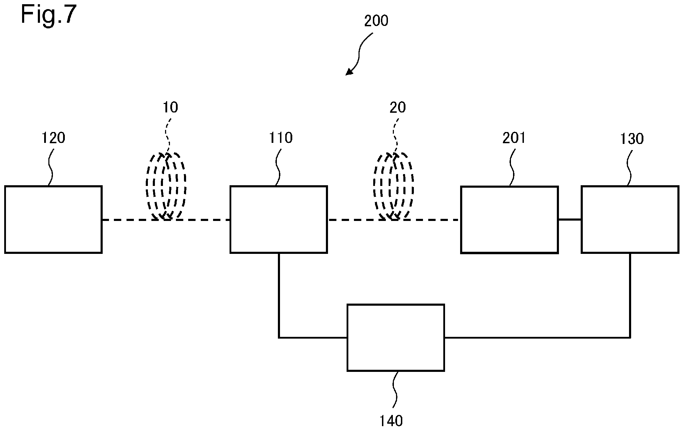

Next, a second example embodiment of the present invention is described. Fig. 7 illustrates a configuration of a multicore fiber connecting device 200 according to the present example embodiment. The multicore fiber connecting device 200 includes a fiber position adjusting unit (fiber position adjusting means) 110, a first optical connecting unit (first optical connecting means) 120, an optical spectrum information generating unit (optical spectrum information generating means) 130, and a control unit (control means) 140. The configuration up to this point is similar to the configuration of the multicore fiber connecting device 100 according to the first example embodiment.

The multicore fiber connecting device 200 according to the present example embodiment is configured to further include a second optical connecting unit (second optical connecting means) 201. The second optical connecting unit 201 optically connects the testing light after the testing light has been guided through a first multicore fiber 10 and a second multicore fiber 20, to an optical spectrum information generating unit 130.

The multicore fiber connecting device 200 according to the present example embodiment introduces testing light of a different wavelength for each core to a multicore fiber, similarly to the multicore fiber connecting device 100 of the first example embodiment. Then, the multicore fiber connecting device 200 is configured to adjust a spatial position of the multicore fiber by use of optical spectrum information of the testing light after the testing light has been guided through the multicore fiber. Thus, the spatial position of the multicore fiber can be adjusted in such a way that a connection loss for each core becomes uniform. Therefore, the multicore fiber connecting device 200 according to the present example embodiment can uniform, when a multicore fiber is connected and used, intensity for each core of an optical signal guided through the multicore fiber.

Herein, the second optical connecting unit 201 can be configured to include a spatial optical system coupling unit (spatial optical system coupling means). The spatial optical coupling unit couples testing light guided through the second multicore fiber 20 to a second single-core fiber connected to the optical spectrum information generating unit 130.

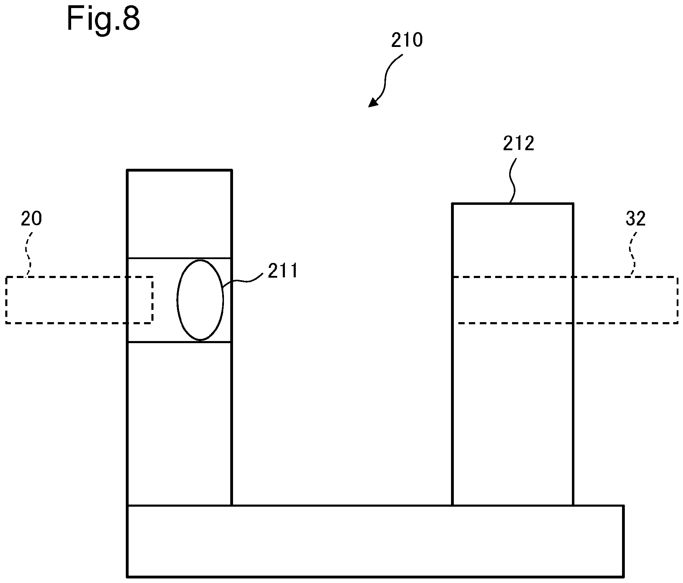

Fig. 8 illustrates one example of a configuration of a spatial optical system coupling unit. A spatial optical system coupling unit 210 can be configured to include a lens optical system 211 and an optical axis adjusting unit (optical axis adjusting means) 212. The lens optical system 211 collects testing light guided through the second multicore fiber 20. The optical axis adjusting unit 212 adjusts an optical axis of a second single-core fiber 32.

With such a configuration, testing light can be introduced to the optical spectrum information generating unit 130 without connecting a fan-in fan-out (FIFO) or a connector to the second multicore fiber 20. Further, as the second single-core fiber 32, an optical fiber with a connector connected to the optical spectrum information generating unit 130 being an optical spectrum analyzer, an optical power meter, or the like can be used as it is.

The second single-core fiber 32 is typically a single mode fiber (SMF) or a multimode fiber (MMF). Preferably, a multimode fiber (MMF) can be used.

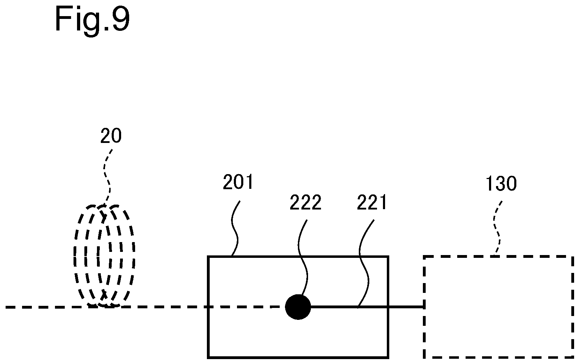

Further, the second optical connecting unit 201 may be configured to include a multimode fiber 221 and a fusing portion 222, as illustrated in Fig. 9. The multimode fiber 221 is connected to the optical spectrum information generating unit 130. Then, the multimode fiber 221 and the second multicore fiber 20 are fusion-spliced at the fusing portion 222.

Herein, when it is assumed that a fan-in fan-out (FIFO) is used as the second optical connecting unit 201, connection between the fan-in fan-out (FIFO) and the second multicore fiber 20 needs fusion of multicore fibers and is therefore difficult. However, adopting the above-described configuration as the second optical connecting unit 201 results in fusion of a multicore fiber (MCF) and a multi-mode fiber (MMF), and, therefore, simple connection is possible. Further, since there is no need to use a fan-in fan-out (FIFO), the second optical connecting unit 201 can be inexpensively configured.

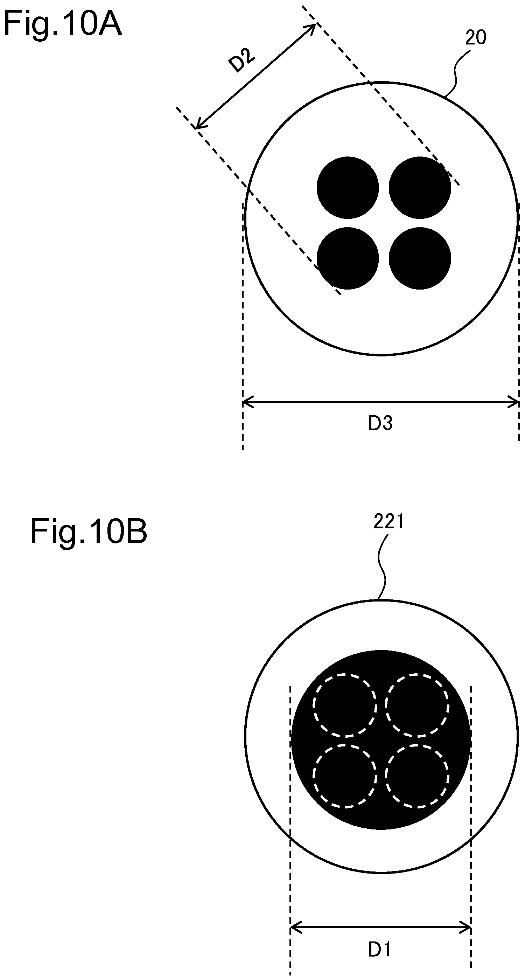

Fig. 10A illustrates an example of a cross section of the second multicore fiber 20. Further, Fig. 10B illustrates an example of a cross section of the multimode fiber 221. Fig. 10A illustrates, as an example, a cross section of the second multicore fiber 20 having four cores (black circles). Further, Fig. 10B illustrates each core (white circle broken line) of the second multicore fiber 20 in addition to a core portion (black circle).

Herein, a core diameter D1 of the multimode fiber 221 can be equal to or more than a diameter D2 of an arrangement region of a core constituting the second multicore fiber 20 and equal to or less than a clad diameter D3 of the second multicore fiber 20. With such a configuration, optical coupling efficiency between the second multicore fiber 20 and the multimode fiber 221 can be increased.

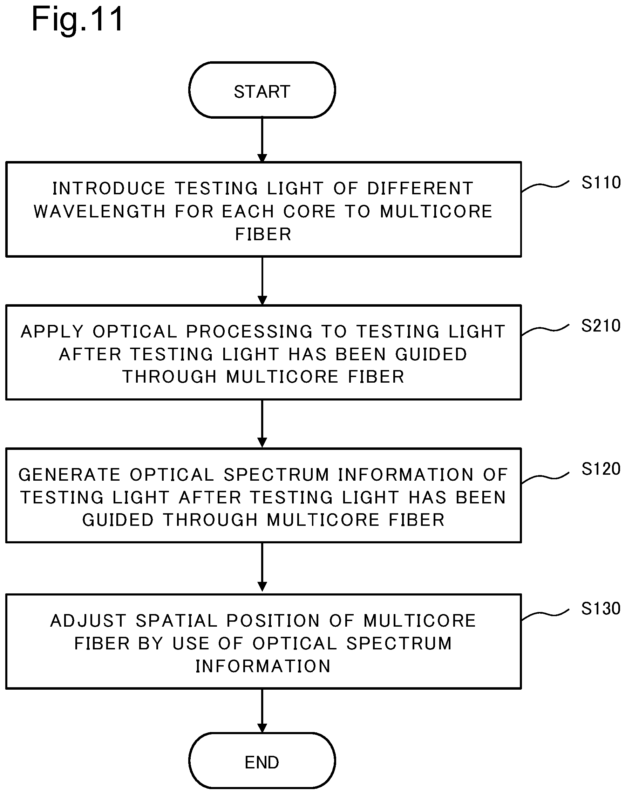

Next, a multicore fiber connecting method according to the present example embodiment is described by use of a flowchart illustrated in Fig. 11.

In the multicore fiber connecting method according to the present example embodiment, first, testing light of a different wavelength for each core is introduced to each of the cores of the first multicore fiber (step S110). Then, optical spectrum information of the testing light after the testing light has been guided through the first multicore fiber and a second multicore fiber connected to the first multicore fiber is generated (step S120). Finally, spatial positions of the first multicore fiber and the second multicore fiber are adjusted by use of the optical spectrum information (step S130).

The configurations are similar to the multicore fiber connecting method according to the first example embodiment. The multicore fiber connecting method according to the present example embodiment is configured to further include applying optical processing to the testing light after the testing light has been guided through the first multicore fiber and the second multicore fiber (step S210). In this instance, it can be assumed that generating optical spectrum information (step S120) includes generating optical spectrum information of the testing light to which the optical processing has been applied.

It may be assumed that applying the optical processing described above (step S210) includes coupling, to the second single-core fiber, the testing light guided through the second multicore fiber. In this instance, it can be assumed that generating optical spectrum information (step S120) includes generating optical spectrum information of the testing light after the testing light has been guided through the second single-core fiber. Herein, it may be assumed that coupling the testing light to the second single-core fiber includes collecting the testing light guided through the second multicore fiber, and adjusting an optical axis of the second single-core fiber.

Further, it may be assumed that applying the optical processing described above (step S210) includes introducing the testing light guided through the second multicore fiber to a multimode fiber fusion-spliced to the second multicore fiber. In this instance, it can be assumed that generating optical spectrum information (step S120) includes generating optical spectrum information of the testing light after the testing light has been guided through the multimode fiber. Herein, it can be assumed that a core diameter of the multimode fiber described above is equal to or more than a diameter of an arrangement region of a core constituting the second multicore fiber, and equal to or less than a clad diameter of the second multicore fiber.

As described above, the multicore fiber connecting device 200 and the multicore fiber connecting method according to the present example embodiment can uniform, when a multicore fiber is connected and used, intensity for each core of an optical signal guided through the multicore fiber.

Some or all of the above-described example embodiments can also be described as, but are not limited to, the following supplementary notes.

(Supplementary note 1) A multicore fiber connecting device including: a fiber position adjusting means for adjusting spatial positions of a first multicore fiber and a second multicore fiber connected to the first multicore fiber; a first optical connecting means for introducing testing light of a different wavelength for each core, to each of the cores of the first multicore fiber; an optical spectrum information generating means for generating optical spectrum information of the testing light after the testing light has been guided through the first multicore fiber and the second multicore fiber; and a control means for controlling the fiber position adjusting means by use of the optical spectrum information.

(Supplementary note 2) The multicore fiber connecting device according to supplementary note 1, wherein the control means controls the fiber position adjusting means in such a way that a difference in light intensity for each of the different wavelengths of the testing light is reduced.

(Supplementary note 3) The multicore fiber connecting device according to supplementary notes 1 or 2, wherein the first optical connecting means comprises a fan-in fan-out means for connecting each core of the first multicore fiber to each first single-core fiber through which each of beams of testing light of different wavelengths is guided.

(Supplementary note 4) The multicore fiber connecting device according to any one of supplementary notes 1 to 3, further comprising a second optical connecting means for optically connecting the testing light after the testing light has been guided through the first multicore fiber and the second multicore fiber, to the optical spectrum information generating means.

(Supplementary note 5) The multicore fiber connecting device according to supplementary note 4, wherein the second optical connecting means includes a spatial optical system coupling means for coupling the testing light guided through the second multicore fiber to a second single-core fiber connected to the optical spectrum information generating means.

(Supplementary note 6) The multicore fiber connecting device according to supplementary note 5, wherein the spatial optical system coupling means includes a lens optical system for collecting the testing light guided through the second multicore fiber, and an optical axis adjusting means for adjusting an optical axis of the second single-core fiber.

(Supplementary note 7) The multicore fiber connecting device according to supplementary note 4, wherein the second optical connecting means includes a multimode fiber connected to the optical spectrum information generating means, and a fusing portion at which the multimode fiber and the second multicore fiber are fusion-spliced with each other.

(Supplementary note 8) The multicore fiber connecting device according to supplementary note 7, wherein a core diameter of the multimode fiber is equal to or more than a diameter of an arrangement region of a core constituting the second multicore fiber, and equal to or less than a clad diameter of the second multicore fiber.

(Supplementary note 9) The multicore fiber connecting device according to any one of supplementary notes 1 to 8, further including an end face fusing means for melting and connecting an end face of the first multicore fiber and an end face of the second multicore fiber to each other.

(Supplementary note 10) A multicore fiber connecting method including: introducing testing light of a different wavelength for each core, to each of the cores of a first multicore fiber; generating optical spectrum information of the testing light after the testing light has been guided through the first multicore fiber, and a second multicore fiber connected to the first multicore fiber; and adjusting spatial positions of the first multicore fiber and the second multicore fiber by use of the optical spectrum information.

(Supplementary note 11) The multicore fiber connecting method according to supplementary note 10, wherein adjusting the spatial position includes adjusting the spatial position in such a way that a difference in light intensity for each of the different wavelengths of the testing light is reduced.

(Supplementary note 12) The multicore fiber connecting method according to supplementary note 10 or 11, wherein introducing the testing light includes connecting each core of the first multicore fiber to each first single-core fiber through which each of beams of testing light of different wavelengths is guided.

(Supplementary note 13) The multicore fiber connecting method according to any one of supplementary notes 10 to 12, further including applying optical processing to the testing light after the testing light has been guided through the first multicore fiber and the second multicore fiber, wherein generating the optical spectrum information includes generating optical spectrum information of the testing light to which the optical processing has been applied.

(Supplementary note 14) The multicore fiber connecting method according to supplementary note 13, wherein applying the optical processing includes coupling the testing light guided through the second multicore fiber to a second single-core fiber, and generating the optical spectrum information includes generating optical spectrum information of the testing light after the testing light has been guided through the second single-core fiber.

(Supplementary note 15) The multicore fiber connecting method according to supplementary note 14, wherein coupling the testing light to the second single-core fiber includes collecting the testing light guided through the second multicore fiber, and adjusting an optical axis of the second single-core fiber.

(Supplementary note 16) The multicore fiber connecting method according to supplementary note 13, wherein applying the optical processing includes introducing the testing light guided through the second multicore fiber to a multimode fiber fusion-spliced to the second multicore fiber, and generating the optical spectrum information includes generating optical spectrum information of the testing light after the testing light has been guided through the multimode fiber.

(Supplementary note 17) The multicore fiber connecting method according to supplementary note 16, wherein a core diameter of the multimode fiber is equal to or more than a diameter of an arrangement region of a core constituting the second multicore fiber, and equal to or less than a clad diameter of the second multicore fiber.

(Supplementary note 18) The multicore fiber connecting method according to any one of supplementary notes 10 to 17, further including melting and connecting an end face of the first multicore fiber and an end face of the second multicore fiber to each other.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

### Reference Signs List

- 100, 200: Multicore fiber connecting device
- 110: Fiber position adjusting unit
- 120: First optical connecting unit
- 121: Fan-in fan-out unit
- 130: Optical spectrum information generating unit
- 131: Optical coupler
- 132: Optical bandpass filter
- 133: Optical power meter
- 140: Control unit
- 201: Second optical connecting unit
- 210: Spatial optical system coupling unit
- 211: Lens optical system
- 212: Optical axis adjusting unit
- 221: Multimode fiber
- 222: Fusing portion
- 10: First multicore fiber
- 20: Second multicore fiber
- 31: First single-core fiber

## Claims

1. A multicore fiber connecting device comprising:
fiber position adjusting means configured to adjust spatial positions of a first multicore fiber and a second multicore fiber connected to the first multicore fiber;
first optical connecting means configured to introduce testing light of a different wavelength for each core, to each of the cores of the first multicore fiber;
optical spectrum information generating means configured to generate optical spectrum information of the testing light after the testing light has been guided through the first multicore fiber and the second multicore fiber; and
control means configured to control the fiber position adjusting means by use of the optical spectrum information.

2. The multicore fiber connecting device according to claim 1, wherein
the control means is configured to control the fiber position adjusting means in such a way that a difference in light intensity for each of the different wavelengths of the testing light is reduced.

3. The multicore fiber connecting device according to claim 1 or 2, wherein
the first optical connecting means includes fan-in fan-out means configured to connect each core of the first multicore fiber to each first single-core fiber through which each of beams of testing light of different wavelengths is guided.

4. The multicore fiber connecting device according to any one of claims 1 to 3, further comprising
second optical connecting means configured to optically connect the testing light after the testing light has been guided through the first multicore fiber and the second multicore fiber, to the optical spectrum information generating means.

5. The multicore fiber connecting device according to claim 4, wherein
the second optical connecting means includes spatial optical system coupling means configured to couple the testing light guided through the second multicore fiber to a second single-core fiber connected to the optical spectrum information generating means.

6. The multicore fiber connecting device according to claim 5, wherein
the spatial optical system coupling means includes a lens optical system configured to collect the testing light guided through the second multicore fiber, and optical axis adjusting means configured to adjust an optical axis of the second single-core fiber.

7. The multicore fiber connecting device according to claim 4, wherein
the second optical connecting means includes a multimode fiber connected to the optical spectrum information generating means, and a fusing portion at which the multimode fiber and the second multicore fiber are fusion-spliced with each other.

8. The multicore fiber connecting device according to claim 7, wherein
a core diameter of the multimode fiber is equal to or more than a diameter of an arrangement region of a core constituting the second multicore fiber, and equal to or less than a clad diameter of the second multicore fiber.

9. The multicore fiber connecting device according to any one of claims 1 to 8, further comprising
end face fusing means configured to melt and connect an end face of the first multicore fiber and an end face of the second multicore fiber to each other.

10. A multicore fiber connecting method comprising:
introducing testing light of a different wavelength for each core, to each of the cores of a first multicore fiber;
generating optical spectrum information of the testing light after the testing light has been guided through the first multicore fiber, and a second multicore fiber connected to the first multicore fiber; and
adjusting spatial positions of the first multicore fiber and the second multicore fiber by use of the optical spectrum information.

11. The multicore fiber connecting method according to claim 10, wherein
adjusting the spatial position includes adjusting the spatial position in such a way that a difference in light intensity for each of the different wavelengths of the testing light is reduced.

12. The multicore fiber connecting method according to claim 10 or 11, wherein
introducing the testing light includes connecting each core of the first multicore fiber to each first single-core fiber through which each of beams of testing light of different wavelengths is guided.

13. The multicore fiber connecting method according to any one of claims 10 to 12, further comprising
applying optical processing to the testing light after the testing light has been guided through the first multicore fiber and the second multicore fiber, wherein
generating the optical spectrum information includes generating optical spectrum information of the testing light to which the optical processing has been applied.

14. The multicore fiber connecting method according to claim 13, wherein
applying the optical processing includes coupling the testing light guided through the second multicore fiber to a second single-core fiber, and
generating the optical spectrum information includes generating optical spectrum information of the testing light after the testing light has been guided through the second single-core fiber.

15. The multicore fiber connecting method according to claim 14, wherein
coupling the testing light to the second single-core fiber includes collecting the testing light guided through the second multicore fiber, and adjusting an optical axis of the second single-core fiber.

16. The multicore fiber connecting method according to claim 13, wherein
applying the optical processing includes introducing the testing light guided through the second multicore fiber to a multimode fiber fusion-spliced to the second multicore fiber, and
generating the optical spectrum information includes generating optical spectrum information of the testing light after the testing light has been guided through the multimode fiber.

17. The multicore fiber connecting method according to claim 16, wherein
a core diameter of the multimode fiber is equal to or more than a diameter of an arrangement region of a core constituting the second multicore fiber, and equal to or less than a clad diameter of the second multicore fiber.

18. The multicore fiber connecting method according to any one of claims 10 to 17, further comprising
melting and connecting an end face of the first multicore fiber and an end face of the second multicore fiber to each other.
